# EUROPEAN PATENT APPLICATION

(11) **EP 4 266 586 A1**
(43) Date of publication of application: **25.10.2023**
(21) Application number: 21924586.7
(22) Date of filing: 03.02.2021
(51) Int. Cl.: H04B 1/16

(54) **RECEPTION DEVICE AND A/D CONVERSION METHOD**

(71) Applicant: MITSUBISHI ELECTRIC CORPORATION, Chiyoda-ku Tokyo 100-8310 (JP)
(72) Inventor: ONOHARA, Kiyoshi, Tokyo 1008310 (JP); NISHIOKA, Junya, Tokyo 1008310 (JP); SUZUKI, Naoki, Tokyo 1008310 (JP); ANDO, Toshiyuki, Tokyo 1008310 (JP); TAKABAYASHI, Mikio, Tokyo 1008310 (JP)
(74) Representative: Pfenning, Meinig & Partner mbB
(86) International application number: PCT/JP2021/003817
(87) International publication number: WO 2022/168189

(57) **Abstract**

A reception device includes: a first A/D converter 3 to receive an analog information signal, convert the input analog information signal into a first digital information signal by A/D conversion, and output the first digital information signal; an analog amplifier 5 to receive the analog information signal, amplify the input analog information signal, and output an analog information amplification signal; a second A/D converter 6 to convert the analog information amplification signal output from the analog amplifier 5 into a second digital information signal by A/D conversion and output the second digital information signal; a frequency characteristic correcting unit 7 to output a second digital information correction signal obtained by correcting the second digital information signal output from the second A/D converter 6 based on a frequency-dependent input/output characteristic of the analog amplifier 5; and an information signal selecting and outputting unit 9 to select and output, as a digital information signal, either the first digital information signal output from the first A/D converter 3 or the second digital information correction signal output from the frequency characteristic correcting unit 7.

## Description

### TECHNICAL FIELD

The present disclosure relates to a reception device and an A/D conversion method that perform A/D (analog to digital) conversion processing of a reception signal, and particularly relates to a reception device and an A/D conversion method that perform A/D conversion processing by an analog-digital mixed system.

### BACKGROUND ART

In recent years, high-frequency signals at 10 GHz or more are increasingly handled in a communication system that performs transmission and reception by means of wireless communication, optical fiber transmission, or the like, the communication system transmitting an information signal or a radar signal modulated on a transmission side (transmission device) and demodulating or detecting a reception signal on a reception side (reception device).

On the other hand, with the technological progress of semiconductor manufacturing processes, reduction in voltage of a power supply for semiconductor integrated circuits is in progress.

Under such circumstances, it is urgently necessary to achieve a low-voltage operation of an A/D converter that converts an analog signal into a digital signal in a reception device.

In addition, as the band of a signal to be handled becomes wider, a sampling rate required for conversion from an analog signal to a digital signal also increases. In a case where a signal at 10 GHz is handled, sampling performance per second corresponding to 20 GS/s (S/s: samples per second) or higher is required.

In general, when the sampling rate increases, bit resolution tends to decrease conversely. For example, in an A/D converter having a sampling rate of 100 MS/s, bit resolution of approximately 16 bits can be achieved. However, in an A/D converter having a sampling rate of 20 GS/s, the bit resolution decreases to about several bits.

Patent Literature 1 is known as a method for improving bit resolution of an A/D converter.

An A/D conversion device disclosed in Patent Literature 1 is an A/D conversion device that performs A/D conversion processing by an analog-digital mixed system. This A/D conversion device uses a first A/D converter and a second A/D converter. An analog signal is directly input to the first A/D converter and is converted into a digital signal. An analog signal amplified by an analog amplifier is input to the second A/D converter and is converted into a digital signal. The obtained digital signal after the A/D conversion is linearly converted by a nonlinear correction unit, and then, is compared with the digital signal from the first A/D converter in terms of amplitude. Either of the digital signals is selected. Thus, this A/D conversion device improves the bit resolution.

### CITATION LIST

### PATENT LITERATURE

Patent Literature 1: WO 2020/178954

### SUMMARY OF INVENTION

### TECHNICAL PROBLEM

The A/D conversion device, disclosed in Patent Document 1, that performs the A/D conversion processing by the analog-digital mixed system can maintain the signal-to-noise ratio (S/N ratio) even when the amplitude of the reception signal is small. Meanwhile, it is further desired to obtain a digital signal without waveform distortion corresponding to the frequency of the reception signal caused depending on input/output characteristics of the analog amplifier.

The present disclosure has been made in view of the above circumstances, and an object of the present disclosure is to provide a reception device that performs A/D conversion processing by an analog-digital mixed system and can handle a digital signal in which waveform distortion corresponding to a frequency of a reception signal is suppressed.

### SOLUTION TO PROBLEM

A reception device according to the present disclosure includes: a first A/D converter to receive an analog information signal, convert the input analog information signal into a first digital information signal by A/D conversion, and output the first digital information signal; an analog amplifier to receive the analog information signal, amplify the input analog information signal, and output an analog information amplification signal; a second A/D converter to convert the analog information amplification signal output from the analog amplifier into a second digital information signal by A/D conversion and output the second digital information signal; a frequency characteristic correcting unit to output a second digital information correction signal obtained by correcting the second digital information signal output from the second A/D converter based on a frequency-dependent input/output characteristic of the analog amplifier; and an information signal selecting and outputting unit to select and output, as a digital information signal, either the first digital information signal output from the first A/D converter or the second digital information correction signal output from the frequency characteristic correcting unit.

### ADVANTAGEOUS EFFECTS OF INVENTION

According to the present disclosure, a digital signal in which waveform distortion corresponding to a frequency is suppressed can be handled as a digital signal obtained by performing A/D conversion processing on a reception signal including an analog signal.

### BRIEF DESCRIPTION OF DRAWINGS

FIG. 1 is a configuration diagram illustrating a reception device used in a wireless communication system according to a first embodiment, mainly a reception unit of the reception device that receives an information signal.
FIG. 2 is a diagram illustrating input/output characteristics of an analog amplifier in the reception device according to the first embodiment.
FIG. 3 is a diagram for describing A/D conversion processing in a first A/D conversion processing system A and a second A/D conversion processing system B in the reception device according to the first embodiment.
FIG. 4 is a configuration diagram illustrating an amplitude comparison unit in the reception device according to the first embodiment.
FIG. 5 is a configuration diagram illustrating a reception device used in a wireless communication system according to a second embodiment, mainly a reception unit of the reception device that receives an information signal.
FIG. 6 is a configuration diagram illustrating a reception device used in a wireless communication system according to a third embodiment, mainly a reception unit of the reception device that receives an information signal.
FIG. 7 is a configuration diagram illustrating a reception device used in an optical communication system according to a fourth embodiment, mainly a reception unit of the reception device that receives an information signal.

### DESCRIPTION OF EMBODIMENTS

### First Embodiment

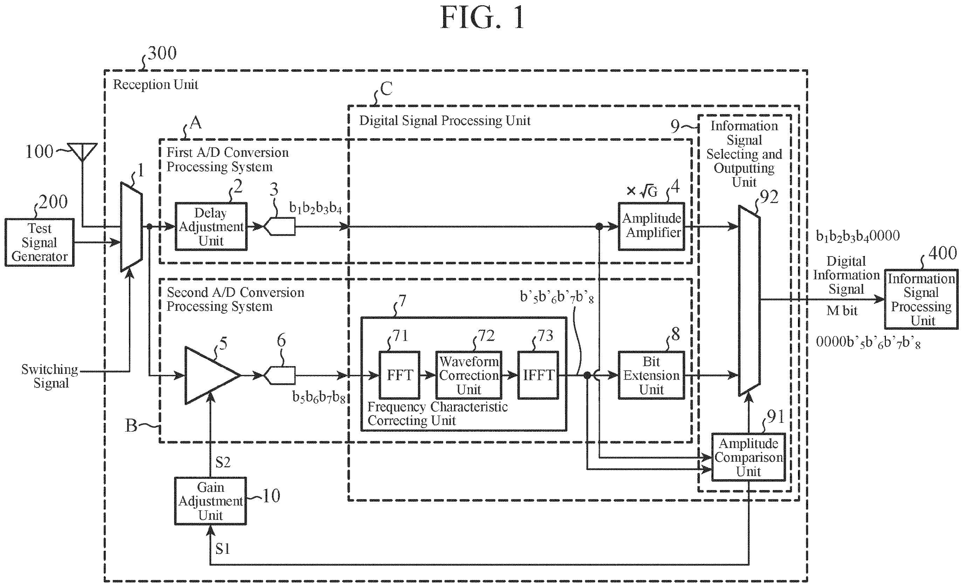

A reception device according to a first embodiment will be described with reference to FIGS. 1 to 4.

The reception device according to the first embodiment is a wireless reception device that receives, via a reception antenna, a modulated information signal transmitted from a wireless transmission device via a transmission antenna and demodulates or detects the received information signal. The wireless transmission device and the wireless reception device constitute a wireless communication system.

A high-frequency signal at 10 GHz or higher is used as the information signal that includes an analog signal and that is transmitted from the wireless transmission device. The information signal including an analog signal is hereinafter referred to as an analog information signal.

FIG. 1 illustrates the wireless reception device that receives an analog information signal transmitted from the wireless transmission device.

The wireless reception device: converts the analog information signal, which is transmitted from the wireless transmission device and received by a reception antenna 100, into a digital information signal by A/D conversion processing performed by an A/D conversion device which is a reception unit 300; outputs the digital information signal; and performs signal processing on the digital information signal output from the A/D conversion device by an information signal processing unit 400 such as a demodulation unit or a detection unit.

The reception device includes the reception antenna 100, a test signal generator 200, the reception unit 300 including an A/D conversion device, and the information signal processing unit 400.

The reception unit 300 including an A/D conversion device and the information signal processing unit 400 are integrated (integrated as an IC) as a semiconductor integrated circuit device.

In the present disclosure, "--er (or)", "-- device", and "-- unit" are expressions used to clearly represent constituent elements. When integrated as a semiconductor integrated circuit device, "--er (or)" and "-- device" refer to "-- circuit", and "-- unit" refers to a component that implements a function by a microprocessor.

The reception antenna 100 receives the analog information signal transmitted from the wireless transmission device.

The test signal generator 200 outputs a test signal including an analog signal or the like used for adjustment or the like of the reception unit 300.

The test signal generator 200 is used in advance before the reception device is activated, that is, before the start of reception of the analog information signal, and the test signal is used for, for example, adjustment of the reception unit 300.

The test signal generator 200 is also used during operation after the reception device starts receiving, and the test signal is used for adjusting the reception unit 300.

The test signal will be described later.

The reception unit 300 performs A/D conversion processing on the analog information signal received by the reception antenna 100 and outputs an information signal including a digital signal to the information signal processing unit 400.

The information signal processing unit 400 demodulates or detects the information signal using the information signal including a digital signal from the reception unit 300. The information signal including a digital signal is hereinafter referred to as a digital information signal.

The reception unit 300 includes an input-side selector 1, a delay adjustment unit 2, a first A/D converter 3, an amplitude amplification unit 4, an analog amplifier 5, a second A/D converter 6, a frequency characteristic correcting unit 7, a bit extension unit 8, an information signal selecting and outputting unit 9, and a gain adjustment unit 10.

The input-side selector 1 switches and outputs the analog information signal received by the reception antenna 100 and the analog test signal output from the test signal generator 200 on the basis of a switching signal.

Before operation as the reception device, the input-side selector 1 outputs the test signal from the test signal generator 200 on the basis of the switching signal.

The test signal output from the test signal generator 200 at this time is a reference voltage setting signal for adjusting and setting reference voltages of the first A/D converter 3 and the second A/D converter 6, and a delay amount setting signal for setting a delay amount in the delay adjustment unit 2 for adjusting a time skew caused by the difference between the length of a transmission line from an output end of the input-side selector 1 to an input end of the first A/D converter 3 and the length of a transmission line including a delay in the analog amplifier 5 from the output end of the input-side selector 1 to an input end of the second A/D converter 6.

When the function and operation as the reception device are started, the input-side selector 1 divides the analog information signal received by the reception antenna 100 in response to the switching signal, and outputs the divided analog information signals to the delay adjustment unit 2 and the analog amplifier 5, respectively.

In addition, when receiving the switching signal for adjusting the reception unit 300 during operation as the reception device, the input-side selector 1 outputs the test signal from the test signal generator 200.

The test signal output from the test signal generator 200 at this time is an initial setting signal that initializes the gains of the amplitude amplification unit 4 and the analog amplifier 5.

Note that adjustment of the reception unit 300 is not necessary during operation as the reception device, and in a case where the test signal generator 200 is only used before the operation of the reception device, that is, before shipment, the reception device may not include the test signal generator 200. In this case, the input-side selector 1 is not necessary, and the analog information signal received by the reception antenna 100 is directly input to the delay adjustment unit 2 and the analog amplifier 5. The test signal by the test signal generator 200 may be directly input to the delay adjustment unit 2 and the analog amplifier 5 at the time of pre-adjustment.

The delay adjustment unit 2 adjusts a timing at which the analog information signal is input to the first A/D converter 3 to be the same as a timing at which an analog information amplification signal is input to the second A/D converter 6.

That is, the delay adjustment unit 2 delays the time when the analog information signal received by the reception antenna 100 reaches the input end of the first A/D converter 3 in order to adjust the time when the analog information signal received by the reception antenna 100 reaches the input end of the first A/D converter 3 and the time when the analog information signal reaches the input end of the second A/D converter 6 to be the same.

As the adjustment time by the delay adjustment unit 2, the delay time of the delay adjustment unit 2 is set in advance such that the delay amount setting signal from the test signal generator 200 is input to the reception unit 300 via the input-side selector 1, and the time when the delay amount setting signal reaches the input end of the first A/D converter 3 and the time when the delay amount setting signal reaches the input end of the second A/D converter 6 are the same.

The first A/D converter 3 receives the analog information signal received by the reception antenna 100 via the delay adjustment unit 2, converts the input analog information signal into a first digital information signal by A/D conversion, and outputs the first digital information signal. As an example, the first digital information signal is a signal (b₁b₂b₃b₄) having four bits as quantization bits.

The amplitude amplification unit 4 multiplies the amplitude of the first digital information signal from the first A/D converter 3.

That is, assuming that the power gain of the analog amplifier 5 is G [dB], the amplitude amplification unit 4 multiplies (√G) the amplitude of the first digital information signal so that a gain equivalent to the amplification by the analog amplifier 5 is obtained.

Note that the multiplication factor √G of the amplitude amplification unit 4 is initially set by a test signal output from the test signal generator 200 in advance before the reception device is operated.

As an example, when the power gain G of the analog amplifier 5 is 24 [dB], the voltage amplitude of the analog information amplification signal output from the analog amplifier 5 is 16 (= 2⁴) times that of the analog information signal input to the analog amplifier 5.

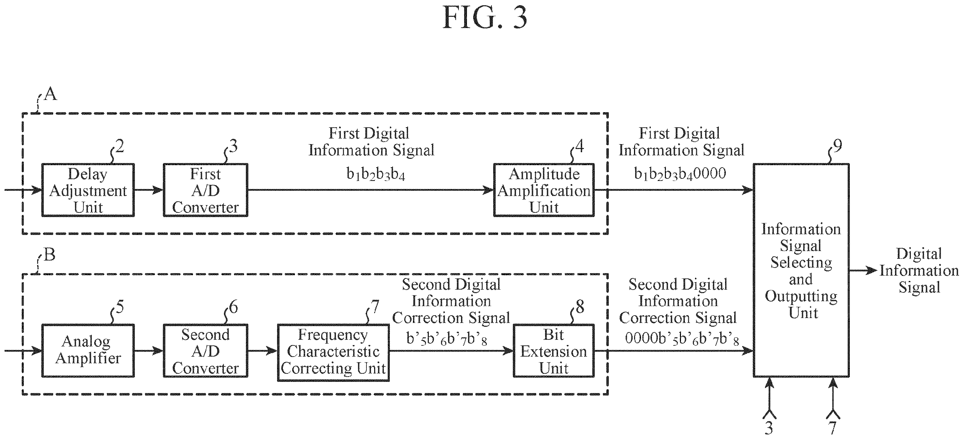

Therefore, as illustrated in FIG. 3, the amplitude amplification unit 4 shifts the first digital information signal from the first A/D converter 3 to the high-order side by 4 bits by the amplitude amplification unit 4 so that the amplitude of the first digital information signal from the first A/D converter 3 becomes equal to the amplitude of the analog amplifier 5, and outputs the first digital information signal as an 8-bit signal (b₁b₂b₃b₄0000).

The delay adjustment unit 2, the first A/D converter 3, and the amplitude amplification unit 4 constitute a first A/D conversion processing system A that converts the analog information signal received by the reception antenna 100 into the first digital information signal by A/D conversion processing, and outputs the first digital information signal which has been subjected to amplitude control.

The analog amplifier 5 receives, directly or via the input-side selector 1, the analog information signal received by the reception antenna 100, amplifies the analog information signal which is input after being subjected to gain adjustment by a gain adjustment signal S2 from the gain adjustment unit 10, and outputs the amplified analog information signal as the analog information amplification signal. As an example, the power gain G of the analog amplifier 5 is 24 [dB].

Note that the power gain G of the analog amplifier 5 is initially set by a test signal output from the test signal generator 200 in advance before the reception device is operated.

The second A/D converter 6 converts the analog information amplification signal output from the analog amplifier 5 into a second digital information signal by A/D conversion, and outputs the second digital information signal. As an example, the second digital information signal is a signal (b₅b₆b₇b₈) having four bits as quantization bits.

The frequency characteristic correcting unit 7 obtains a second digital information correction signal obtained by correcting the second digital information signal output from the second A/D converter 6 based on frequency-dependent input/output characteristics of the analog amplifier 5. The second digital information correction signal obtained at this time is, for example, a 4-bit signal (b₅'b₆'b₇'b₈').

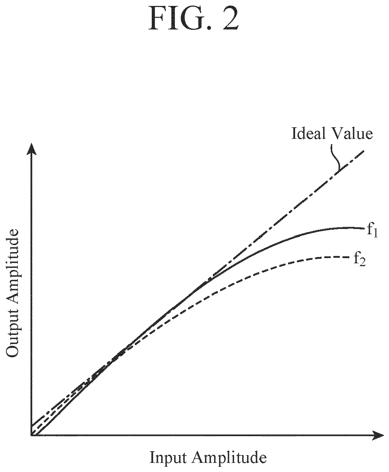

Ideally, the relationship between an input amplitude and an output amplitude is desirably linear in the input/output characteristics of the analog amplifier 5. However, as illustrated in FIG. 2, the gain decreases with an increase in the amplitude of the input signal, and the value of the amplitude of the output signal is not proportional to the amplitude of the input signal. Furthermore, the input/output characteristics vary depending on frequencies.

Due to the frequency dependence of the input/output characteristics, waveform distortion occurs in the analog information amplification signal output from the analog amplifier 5, and this also affects the second digital information signal output from the second A/D converter 6.

In FIG. 2, the horizontal axis represents the amplitude of the input signal to the analog amplifier 5, the vertical axis represents the amplitude of the output signal from the analog amplifier 5, the solid line represents the input/output characteristics with respect to a frequency f₁, and the dotted line represents the input/output characteristics with respect to a frequency f₂.

The frequency characteristic correcting unit 7 suppresses an influence, caused by waveform distortion generated in the analog information amplification signal output from the analog amplifier 5 due to the frequency dependence of the input/output characteristics of the analog amplifier 5, on the second digital information signal by performing correction corresponding to the frequency of the analog information signal, thereby obtaining the second digital information signal in which the influence caused by the frequency dependence of the input/output characteristics of the analog amplifier 5 is suppressed.

The frequency characteristic correcting unit 7 includes a fast Fourier transform (FFT) unit 71, a waveform correction unit 72, and an inverse fast Fourier transform (IFFT) unit 73.

The fast Fourier transform unit 71 transforms the second digital information signal output from the second A/D converter 6 from a time waveform, that is, from a time domain signal, to a frequency spectrum, that is, a frequency domain signal, by Fourier transform (FFT).

The waveform correction unit 72 corrects the second digital information signal, which is a frequency domain signal obtained by fast Fourier transform by the fast Fourier transform unit 71, based on the frequency-dependent input/output characteristics of the analog amplifier 5.

The correction based on the frequency-dependent input/output characteristics of the analog amplifier 5 by the waveform correction unit 72 is performed using a correction value of the input/output characteristics for the second digital information signal set corresponding to the frequency of the analog information signal input to the analog amplifier 5.

The correction value of the input/output characteristics for the second digital information signal to be set is a value of gain corresponding to the frequency of the analog information signal, that is, a value of gain based on the amplitude of the output signal with respect to the amplitude of the input signal illustrated in FIG. 2. In other words, it is a correction value of the amplitude based on the difference between the amplitude of the output signal in the ideal input/output characteristics indicated by the one-dot chain line in FIG. 2 with respect to the input signal and the amplitude of the output signal in the input/output characteristics with respect to the frequency f₁ and the frequency f₂.

The correction value of the input/output characteristics with respect to the second digital information signal is set in such a manner that, before the operation of the reception device is started, the analog test signal output from the test signal generator 200 is input to the analog amplifier 5, and the analog amplification signal output from the analog amplifier 5 is measured.

In addition, if the frequency-dependent input/output characteristics of the analog amplifier 5 are known in advance, the correction value may be set based on the frequency-dependent input/output characteristics which are known in advance.

The set correction value of the input/output characteristics is stored in a correction table included in the waveform correction unit 72.

The correction table is a gain correction table indicating a correction value of the input/output characteristics based on a gain by the amplitude of the output signal corresponding to the ideal characteristics with respect to the amplitude of the input signal using the frequency of the analog information signal as a key or a difference in the output amplitude with respect to the output amplitude of the ideal characteristics.

The waveform correction unit 72 corrects the frequency dependence of the input/output characteristics in the second digital information signal, which has been subjected to Fourier transform by the fast Fourier transform unit 71, with the correction value of the input/output characteristics stored in the gain correction table using the frequency of the analog information signal as a key.

The inverse fast Fourier transform unit 73 performs inverse Fourier transform (IFFT) on the second digital information signal corrected by the waveform correction unit 72 from a frequency domain signal to an original time domain signal to thereby obtain the second digital information correction signal.

The bit extension unit 8 performs bit extension processing of adding high-order bits to the second digital information correction signal by the frequency characteristic correcting unit 7.

The bit extension processing by the bit extension unit 8 is processing of obtaining the second digital information by adding "0" to the high order of the second digital information correction signal so that the second digital information correction signal has the same number of bits as the number of bits of the first digital information signal from the amplitude amplification unit 4.

As an example, the bit extension unit 8 adds four high-order bits (0000) to the second digital information correction signal (b₅'b₆'b₇'b₈'), and outputs the second digital information as an 8-bit signal (0000b₅'b₆'b₇'b₈') as illustrated in FIG. 3.

The analog amplifier 5, the second A/D converter 6, the frequency characteristic correcting unit 7, and the bit extension unit 8 constitute a second A/D conversion processing system B that performs A/D conversion processing on the analog information signal received by the reception antenna 100 and outputs the second digital information signal subjected to gain adjustment and frequency correction.

The amplitudes of both the first digital information output from the first A/D conversion processing system A and the second digital information output from the second A/D conversion processing system B can be handled equally by the amplitude amplification unit 4 and the bit extension unit 8.

The information signal selecting and outputting unit 9 compares the amplitude of the first digital information signal output from the first A/D converter 3 with the amplitude of the second digital information correction signal output from the frequency characteristic correcting unit 7, and outputs either the first digital information signal from the first A/D conversion processing system A or the second digital information signal from the second A/D conversion processing system B as a digital information signal.

When the analog information signal received by the reception antenna 100 and input via the input-side selector 1 has a large amplitude, the information signal selecting and outputting unit 9 selects the first digital information signal from the first A/D conversion processing system A and outputs the first digital information signal as a digital information signal, and when the amplitude of the analog information signal received by the reception antenna 100 is small, the information signal selecting and outputting unit 9 selects the second digital information signal from the second A/D conversion processing system B and outputs the second digital information signal as a digital information signal.

The information signal selecting and outputting unit 9 includes an amplitude comparison unit 91 and an output-side selector 92.

The amplitude comparison unit 91 compares the amplitude of the first digital information signal output from the first A/D converter 3 with the amplitude of the second digital information correction signal output from the frequency characteristic correcting unit 7.

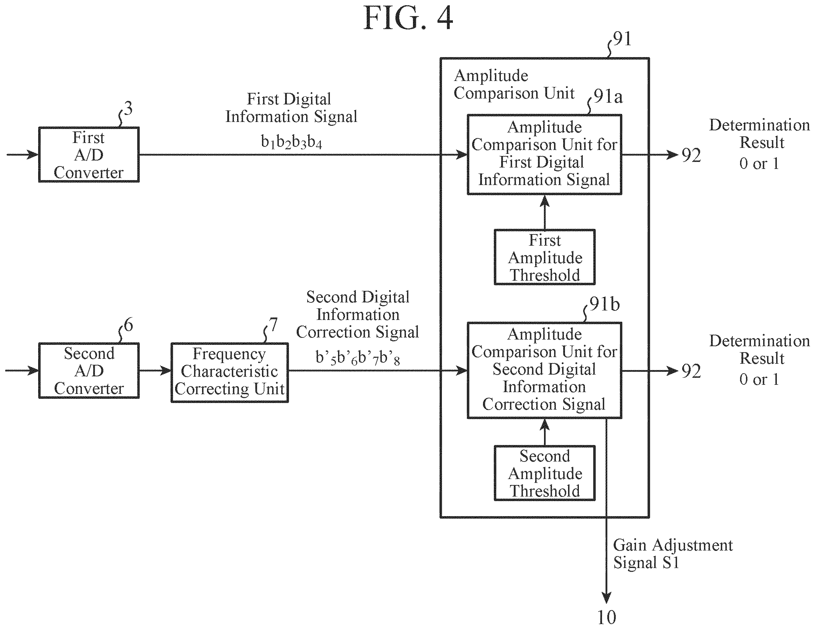

As illustrated in FIG. 4, the amplitude comparison unit 91 includes an amplitude comparison unit 91a for the first digital information signal and an amplitude comparison unit 91b for the second digital information signal.

The amplitude comparison unit 91a compares the amplitude of the first digital information signal output from the first A/D converter 3 with a preset first amplitude threshold.

The amplitude comparison unit 91a sets "1" as a determination result when the amplitude of the first digital information signal output from the first A/D converter 3 is equal to or greater than the first amplitude threshold, and sets "0" as a determination result when the amplitude is less than the first amplitude threshold.

When the determination result is "1", the first digital information signal output from the first A/D converter 3 is selected.

Since it is sufficient that the first A/D converter 3 can identify the analog information signal and output the digital information signal, the amplitude comparison unit 91a may select the first digital information signal from the first A/D conversion processing system A in a case where the analog information signal received by the reception antenna 100 has a large amplitude.

Therefore, the first amplitude threshold is set such that the number of bits of the first digital information signal output from the first A/D converter 3 is equal to or larger than the number of valid bits.

The amplitude comparison unit 91b compares the amplitude of the second digital information correction signal output from the frequency characteristic correcting unit 7 with a preset second amplitude threshold.

The amplitude comparison unit 91b sets "1" as a determination result when the amplitude of the second digital information correction signal output from the frequency characteristic correcting unit 7 is less than the second amplitude threshold, and sets "0" as a determination result when the amplitude is equal to or greater than the second amplitude threshold.

When the determination result is "1", the second digital information correction signal output from the frequency characteristic correcting unit 7 is selected.

The second A/D converter 6 only needs to be able to identify the analog information signal received by the reception antenna 100 in a case where the analog information signal has a small amplitude, and thus, the second amplitude threshold is set to a threshold by which the second digital information signal output from the second A/D converter 6 obtained by A/D conversion of the analog information amplification signal output from the analog amplifier 5 does not remain at a high side.

The first amplitude threshold and the second amplitude threshold are set to values at which both the first digital information signal from the first A/D conversion processing system A and the second digital information signal from the second A/D conversion processing system B are not selected at the same time.

The amplitude comparison unit 91 obtains a selection result of selecting the first digital information signal when the determination result of the amplitude comparison unit 91a is "1" and selecting the second digital information correction signal when the determination result of the amplitude comparison unit 91b is "1".

Further, the amplitude comparison unit 91 outputs a gain adjustment signal S1 when the second digital information correction signal output from the frequency characteristic correcting unit 7 input to the amplitude comparison unit 91b is not appropriate.

A case where the amplitude comparison unit 91 determines that the second digital information correction signal is not appropriate is, for example, a case where the determination result of the amplitude comparison unit 91b is "0" even though the determination result of the amplitude comparison unit 91a is "0", or a case where the second digital information signal output from the second A/D converter 6 remains at a high side even though the amplitude of the second digital information correction signal is less than the second amplitude threshold.

On the basis of the selection result by the amplitude comparison unit 91, the output-side selector 92 selects and outputs the first digital information signal from the first A/D conversion processing system A when the determination result of the amplitude comparison unit 91a is "1", and selects and outputs the second digital information signal from the second A/D conversion processing system B when the determination result of the amplitude comparison unit 91b is "1".

As an example, when the determination result of the amplitude comparison unit 91 indicates that the first digital information signal is selected, the first digital information signal that is an 8-bit signal (b₁b₂b₃b40000) is output from the output-side selector 92.

In addition, when the determination result of the amplitude comparison unit 91 indicates that the second digital information signal is selected, the second digital information signal that is an 8-bit signal (0000b₅'b₆'b₇'b₈') is output from the output-side selector 92.

The amplitude amplification unit 4, the frequency characteristic correcting unit 7, the bit extension unit 8, and the information signal selecting and outputting unit 9 constitute a digital signal processing unit C that processes the first digital information signal output from the first A/D converter 3 and the second digital information signal output from the second A/D converter 6.

The digital signal processing unit C is implemented by a microprocessor.

The gain adjustment unit 10 generates a gain adjustment signal S2 on the basis of the gain adjustment signal S1 by the amplitude comparison unit 91b, and adjusts the value of the gain G of the analog amplifier 5 using the gain adjustment signal S2.

Next, the operation will be described.

First, adjustment of the reception unit 300 before the start of operation of the reception device by the test signal generator 200 will be described. In response to the switching signal, the input-side selector 1 selects and outputs the test signal from the test signal generator 200.

The adjustment of the reception unit 300 includes adjustment of the reference voltages of the first A/D converter 3 and the second A/D converter 6, setting of the delay amount in the delay adjustment unit 2, initial setting of the gain (multiplication factor √G) of the amplitude amplification unit 4 and the power gain G of the analog amplifier 5, and setting of the correction value of the input/output characteristics with respect to the second digital information signal, and the adjustment and settings are performed by inputting the corresponding test signal from the test signal generator 200 to the first A/D conversion processing system A and the second A/D conversion processing system B via the input-side selector 1.

The delay amount in the delay adjustment unit 2 is set by inputting a delay amount setting signal from the test signal generator 200 to the first A/D conversion processing system A and the second A/D conversion processing system B via the input-side selector 1, and measuring the delay amount setting signal input to the input end of the first A/D converter 3 and the input end of the second A/D converter 6.

That is, the delay amount in the delay adjustment unit 2 is adjusted and set such that the delay amount setting signal input to the input end of the first A/D converter 3 and the delay amount setting signal input to the input end of the second A/D converter 6 are input at the same timing, that is, the delay amount setting signals input to the input end of the first A/D converter 3 and the input end of the second A/D converter 6 are synchronized at the same timing.

Due to the delay amount being set in the delay adjustment unit 2 as described above, a time skew caused by the difference between the length of a transmission line from the output end of the input-side selector 1 to the input end of the first A/D converter 3 and the length of a transmission line including a delay in the analog amplifier 5 from the output end of the input-side selector 1 to the input end of the second A/D converter 6 can be adjusted, whereby the analog information signal received by the reception antenna 100 can be input to the input end of the first A/D converter 3 and the input end of the second A/D converter 6 at the same timing.

The correction value of the input/output characteristics for the second digital information signal, that is, the correction value of the input/output characteristics for the analog amplifier 5 stored in the correction table included in the waveform correction unit 72, is set in such a manner that a test signal having a sine wave whose amplitude value is gradually increased is input to the analog amplifier 5, the amplitude value of the test signal output from the analog amplifier 5 is measured to obtain the input/output characteristics of the analog amplifier 5, and the obtained input/output characteristics of the analog amplifier 5 are compared with the ideal input/output characteristics. The correction value of the input/output characteristics for the second digital information signal is set using a plurality of test signals having different frequencies.

The obtained correction value of the input/output characteristics for the second digital information signal is stored in the correction table included in the waveform correction unit 72 for each frequency.

Note that a correction value of the input/output characteristics for the second digital information signal with respect to the consecutive frequencies may be obtained on the basis of the correction value of the input/output characteristics obtained for each frequency, and the obtained correction value of the input/output characteristics for the second digital information signal with respect to the consecutive frequencies may be stored in the correction table included in the waveform correction unit 72.

Next, an operation of performing A/D conversion processing on the analog information signal that is a wireless reception signal received by the reception antenna 100 and outputting the analog information signal as a digital signal will be described. In response to the switching signal, the input-side selector 1 selects and outputs the analog information signal received by the reception antenna 1.

The analog information signal selected by the input-side selector 1 is divided and input to the first A/D conversion processing system A and the second A/D conversion processing system B.

In the first A/D conversion processing system A, the analog information signal is delayed by the delay adjustment unit 2, and the first A/D converter 3 performs A/D conversion on the delayed analog information signal and outputs a first digital information signal that is a 4-bit signal (b₁b₂b₃b₄) (step ST11).

Next, the amplitude amplification unit 4 multiplies (√G) the amplitude of the first digital information signal from the first A/D converter 3, and shifts the first digital information signal (b₁b₂b₃b₄) to a high-order side by 4 bits to thereby obtain the first digital information signal that is an 8-bit signal (b₁b₂b₃b₄0000) (step ST12).

On the other hand, in the second A/D conversion processing system B, the gain of the analog amplifier 5 is adjusted with the gain adjustment signal S2, and the analog amplifier 5 amplifies the analog information signal to obtain an analog information amplification signal, and outputs the analog information amplification signal (step ST21).

Next, the second A/D converter 6 performs A/D conversion on the analog information amplification signal that is a 4-bit signal (b₅b₆b₇b₈) and that is output from the analog amplifier 5 to obtain a second digital information signal, and outputs the second digital information signal (step ST22).

Then, the frequency characteristic correcting unit 7 obtains a second digital information correction signal that is a 4-bit signal (b₅'b₆'b₇'b₈') obtained by correcting the second digital information signal (b₅b₆b₇b₈) based on the frequency-dependent input/output characteristics of the analog amplifier 5 (step ST23).

Step ST23 in which the frequency characteristic correcting unit 7 obtains the second digital information correction signal includes steps ST231 to ST233.

In step ST231, the fast Fourier transform unit 71 transforms the second digital information signal into a frequency spectrum from a time waveform by Fourier transform.

In step ST232, the waveform correction unit 72 corrects the Fourier-transformed second digital information signal using the frequency-dependent input/output characteristics of the analog amplifier 5.

In step ST233, the inverse fast Fourier transform unit transforms the corrected second digital information signal into a time waveform from a frequency spectrum by inverse Fourier transform, thereby obtaining the second digital information correction signal.

Next, the bit extension unit 8 performs bit extension processing of adding four high-order bits of "0" to the second digital information correction signal by the frequency characteristic correcting unit 7 to add four high-order bits (0000) to the second digital information correction signal (b₅'b₆'b₇'b₈'), thereby obtaining second digital information including an 8-bit signal (0000b₅'b₆'b₇'b₈') (step ST24).

The information signal selecting and outputting unit 9 compares the amplitude of the analog information signal (b₁b₂b₃b₄) from the first A/D converter 3 with the amplitude of the second digital information correction signal (b₅'b₆'b₇'b₈') from the frequency characteristic correcting unit 7, and outputs either the first digital information signal (b₁b₂b₃b₄0000) by the first A/D conversion processing system A or the second digital information correction signal (0000b₅'b₆'b₇'b₈') as a digital information signal (step ST3).

Step ST3 in which the information signal selecting and outputting unit 9 outputs either the first digital information signal and the second digital information correction signal as a digital information signal includes steps ST31 and ST32.

In step ST31, the amplitude comparison unit 91 compares the amplitude of the first digital information signal output from the first A/D converter 3 with the amplitude of the second digital information correction signal output from the frequency characteristic correcting unit 7, and obtains a selection result of which to select.

Specifically, the amplitude comparison unit 91a for the first digital information signal constituting the amplitude comparison unit 91 compares the amplitude of the first digital information signal output from the first A/D converter 3 with the preset first amplitude threshold. When the amplitude of the first digital information signal is equal to or greater than the first amplitude threshold, the amplitude comparison unit 91a sets "1" as a determination result of selecting the first digital information signal, and when the amplitude is less than the first amplitude threshold, the amplitude comparison unit 91a sets "0" as a determination result (step ST311).

On the other hand, the amplitude comparison unit 91b for the second digital information signal constituting the amplitude comparison unit 91 compares the amplitude of the second digital information correction signal output from the frequency characteristic correcting unit 7 with the preset second amplitude threshold. When the amplitude of the second digital information correction signal is less than the second amplitude threshold, the amplitude comparison unit 91b sets "1" as a determination result of selecting the second digital information correction signal, and when the amplitude is equal to or greater than the second amplitude threshold, the amplitude comparison unit 91b sets "0" as a determination result (step ST311).

The amplitude comparison unit 91 obtains a selection result of selecting the first digital information signal when the determination result of the amplitude comparison unit 91a is "1" and selecting the second digital information correction signal when the determination result of the amplitude comparison unit 91b is "1".

In step ST32, the output-side selector 92 outputs the first digital information signal from the first A/D conversion processing system A when the determination result of the amplitude comparison unit 91a is "1", and outputs the second digital information signal from the second A/D conversion processing system B when the determination result of the amplitude comparison unit 91b is "1" on the basis of the selection result by the amplitude comparison unit 91.

As described above, the reception unit 300 converts the analog information signal received by the reception antenna 100 into the first digital information signal subjected to the A/D conversion processing by the first A/D converter 3, and converts the analog information signal amplified by the analog amplifier 5 into the second digital information signal subjected to the A/D conversion processing by the second A/D converter 6 and obtained by correcting the frequency-dependent input/output characteristics of the analog amplifier 5. When the analog information signal received by the reception antenna 100 has a large amplitude, the reception unit 300 selects and outputs the first digital information signal, and when the analog information signal received by the reception antenna 100 has a small amplitude, the reception unit 300 selects and outputs the second digital information signal.

The reception unit 300 includes two A/D conversion processing systems which are the first A/D conversion processing system A including the delay adjustment unit 2, the first A/D converter 3, and the amplitude amplification unit 4, and the second A/D conversion processing system B including the analog amplifier 5, the second A/D converter 6, the frequency characteristic correcting unit 7, and the bit extension unit 8. However, the reception unit 300 may further include a third A/D conversion processing system including an analog amplifier, a second A/D converter, a frequency characteristic correcting unit, and a bit extension unit.

In short, the reception unit 300 may have a plurality of second A/D conversion processing systems each including an analog amplifier, a second A/D converter, a frequency characteristic correcting unit, and a bit extension unit.

In a case where a plurality of second A/D conversion processing systems is provided, the gains of the respective analog amplifiers are set to different values.

The reception device according to the first embodiment includes: the first A/D conversion processing system A that converts the analog information signal received by the reception antenna 100 into the first digital information signal by A/D conversion and outputs the first digital information signal, the first A/D conversion processing system A including the first A/D converter 3; the second A/D conversion processing system B that amplifies the analog information signal and then converts the amplified analog information signal into the second digital information signal by A/D conversion and outputs the second digital information signal, the second A/D conversion processing system including the analog amplifier 5 and the second A/D converter 6; and the information signal selecting and outputting unit 9 that selects and outputs either the first digital information signal by the first A/D conversion processing system A or the second digital information signal by the second digital information signal as the digital information signal. Therefore, bit resolution is improved during the operation with a low-voltage power supply, and the signal-to-noise ratio can be maintained even when the amplitude of the reception signal is small.

Furthermore, the frequency characteristic correcting unit 7 is provided in the second A/D conversion processing system B and the frequency characteristic correcting unit 7 corrects the second digital information signal output from the second A/D conversion processing system B based on the frequency-dependent input/output characteristics of the analog amplifier 5, and thus, waveform distortion does not occur in the second digital information signal due to the frequency-dependent input/output characteristics of the analog amplifier 5.

In addition, the reception device according to the first embodiment does not need a D/A converter having high-precise bit resolution that is required in a sub-ranging method which uses a D/A converter, a subtraction circuit, and an amplifier in addition to two A/D converters in order to improve the bit resolution of the A/D converter. The reception device also does not need an analog subtraction circuit operating for a high band signal.

### Second Embodiment

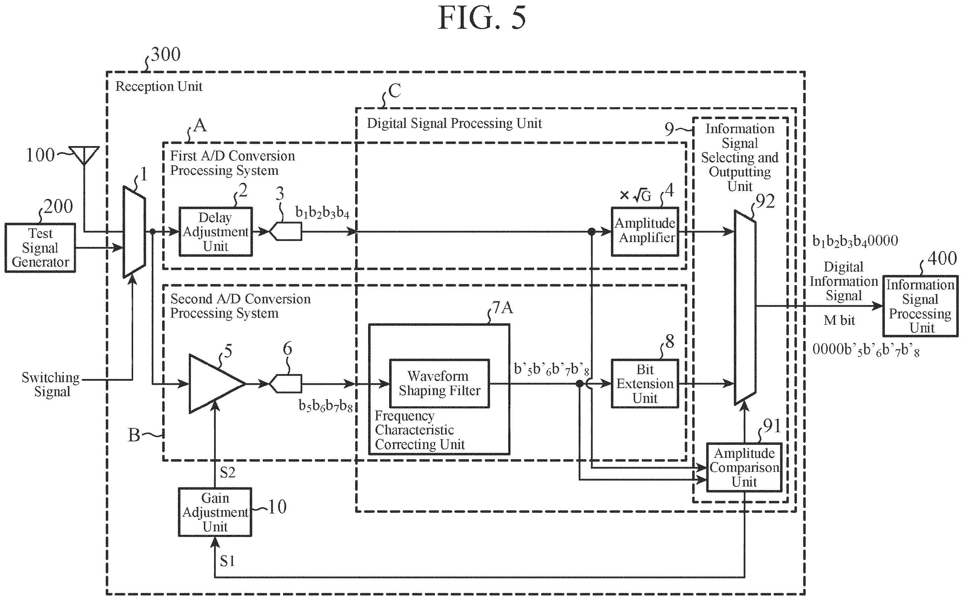

A reception device according to a second embodiment will be described with reference to FIG. 5.

The reception device according to the second embodiment is different from the reception device according to the first embodiment, which includes the frequency characteristic correcting unit 7 provided with the fast Fourier transform (FFT) unit 71, the waveform correction unit 72, and the inverse fast Fourier transform (IFFT) unit 73, in including a frequency characteristic correcting unit 7A provided with a waveform shaping filter, and is the same as the reception device according to the first embodiment in other components.

In FIG. 5, the same reference signs as those in FIG. 1 denote the same or corresponding parts.

That is, similar to the frequency characteristic correcting unit 7 in the reception device according to the first embodiment, the frequency characteristic correcting unit 7A suppresses an influence, caused by waveform distortion generated in the analog information amplification signal output from the analog amplifier 5 due to the frequency dependence of the input/output characteristics of the analog amplifier 5, on the second digital information signal by performing correction corresponding to the frequency of the analog information signal, thereby outputting the second digital information signal in which the influence caused by the frequency dependence of the input/output characteristics of the analog amplifier 5 is suppressed.

The waveform shaping filter constituting the frequency characteristic correcting unit 7A is a digital filter having a characteristic of changing a pass band with a filter coefficient such as a finite impulse response (FIR) filter or an infinite impulse response (IIR) filter.

The waveform shaping filter, which is a digital filter, corrects the second digital information signal output from the second A/D converter 6 by changing a filter coefficient corresponding to the frequency dependence of the input/output characteristics of the analog amplifier 5, and outputs the corrected second digital information signal as a second digital information correction signal.

The waveform shaping filter has a correction table, and a filter coefficient corresponding to the input/output characteristics of the analog amplifier 5 is stored in the correction table.

The filter coefficient stored in the correction table is set in such a manner that, before the operation of the reception device is started, an analog test signal output from the test signal generator 200 is input to the analog amplifier 5, and the analog amplification signal output from the analog amplifier 5 is measured.

In addition, if the frequency-dependent input/output characteristics of the analog amplifier 5 are known in advance, the filter coefficient that is a correction value may be set based on the frequency-dependent input/output characteristics which are known in advance.

The reception device according to the second embodiment operates in the same manner as the reception device according to the first embodiment except that the step of outputting the second digital information correction signal is replaced with a step of correcting the second digital information signal by the waveform shaping filter by changing the filter coefficient corresponding to the frequency-dependent input/output characteristics of the analog amplifier 5 and outputting the corrected second digital information signal as the second digital information correction signal.

Similar to the reception device according to the first embodiment, the reception device according to the second embodiment has the effects of improving bit resolution during operation with a low-voltage power supply, being capable of maintaining the signal-to-noise ratio even when the amplitude of the reception signal is small, preventing an occurrence of waveform distortion in the second digital information signal due to the frequency-dependent input/output characteristics of the analog amplifier 5 by the waveform shaping filter constituting the frequency characteristic correcting unit 7A, eliminating the need for a D/A converter having high-precise bit resolution, and eliminating the need for an analog subtraction circuit that operates for a high band signal.

### Third Embodiment

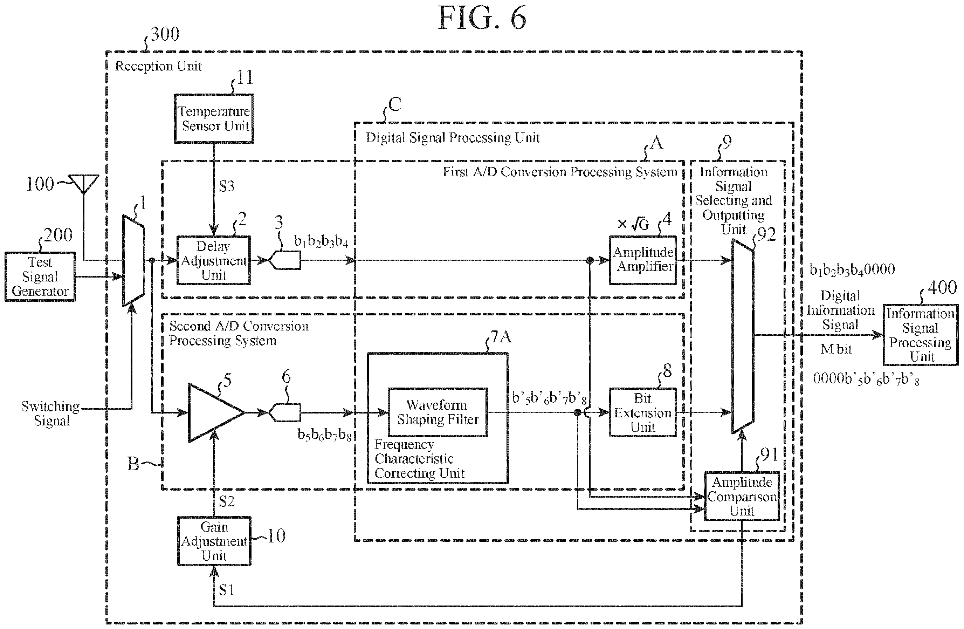

A reception device according to a third embodiment will be described with reference to FIG. 6.

The reception device according to the third embodiment is different from the reception device according to the second embodiment in that the delay adjustment unit 2 is replaced with a delay adjustment unit 2A having a function of adjusting a delay amount with a delay amount control signal S3. The reception device according to the third embodiment is the same as the reception device according to the second embodiment in other components.

In FIG. 6, the same reference signs as those in FIG. 5 denote the same or corresponding parts.

Each of the transmission time of the analog information signal through a transmission line from the output end of the input-side selector 1 to the input end of the first A/D converter 3 and the transmission time of the analog information signal through a transmission line from the output end of the input-side selector 1 to the input end of the second A/D converter 6 including the delay in the analog amplifier 5 is affected by the ambient temperature.

The reception device according to the third embodiment corrects a variation in the transmission time of the analog information signal due to the ambient temperature in such a manner that the delay adjustment unit 2A that receives the delay amount control signal S3 adjusts the delay amount based on a variation in the transmission time.
Thus, the timing at which the analog information signal is input to the first A/D converter 3 is adjusted to be the same as the timing at which the analog information amplification signal is input to the second A/D converter 6, regardless of a change in ambient temperature.

A temperature sensor unit 11 detects the ambient temperature and outputs the delay amount control signal S3 corresponding to the detected ambient temperature to the delay adjustment unit 2A.

The delay adjustment unit 2A adjusts the delay amount with the delay amount control signal output from the temperature sensor unit 11.

The delay adjustment unit 2A has a delay amount correction table in which a delay amount correction value indicating the relationship between the ambient temperature and the delay amount is stored.

The delay amount correction value stored in the delay amount correction table is obtained in such a manner that, before the operation of the reception device is started, a delay amount setting signal output from the test signal generator 200 is input to the reception unit 300, and the delay amount by which the time at which the delay amount setting signal reaches the input end of the first A/D converter 3 and the time at which the delay amount setting signal reaches the input end of the second A/D converter 6 are the same is associated with the ambient temperature while the ambient temperature is changed.

When the delay adjustment unit 2A receives the delay amount control signal S3 output from the temperature sensor unit 11, the delay amount is set with the delay amount correction value stored in the delay amount correction table using the ambient temperature indicated by the delay amount control signal S3 as a key.

The delay adjustment unit 2A dynamically corrects the delay amount by using the delay amount correction table with the delay amount control signal S3 output from the temperature sensor unit 11.

The reception device according to the third embodiment is the same as the reception device according to the second embodiment in the operation of performing the A/D conversion processing on the analog information signal received by the reception antenna 100 and outputting the converted signal as a digital signal, except that the delay adjustment unit 2A dynamically corrects the delay amount using the delay amount correction table by the delay amount control signal S3 output from the temperature sensor unit 11. Therefore, the description thereof is omitted.

The reception device according to the third embodiment has the same effects as those of the reception device according to the second embodiment, and further has an effect of suppressing an influence caused by the ambient temperature.

### Fourth Embodiment

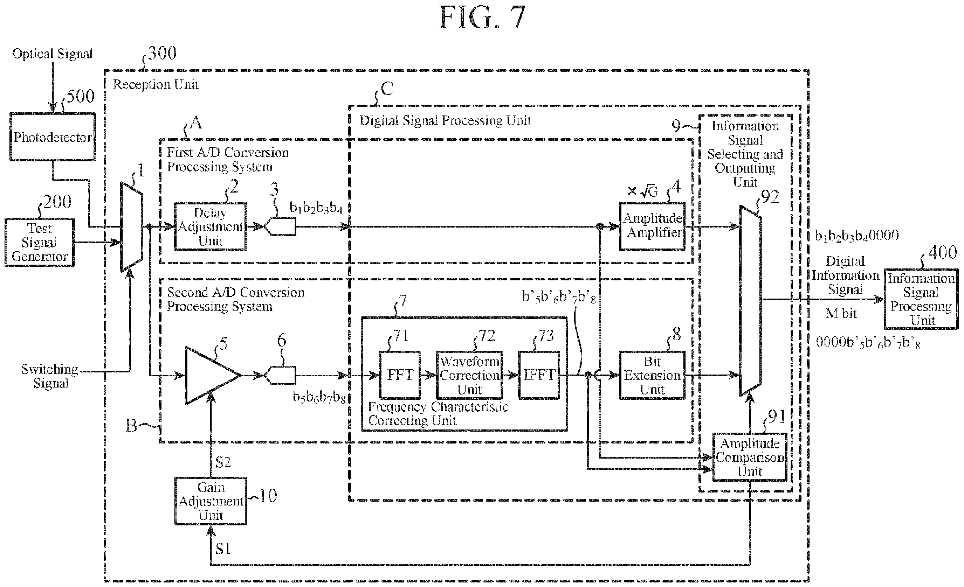

A reception device according to a fourth embodiment will be described with reference to FIG. 7.

The reception device according to the fourth embodiment is different from the reception device according to the first embodiment which is applied to a wireless transmission device in being applied to a digital optical communication system.

In FIG. 7, the same reference signs as those in FIG. 1 denote the same or corresponding parts.

FIG. 7 illustrates a reception device in an optical transmission apparatus including a reception device and a transmission device connected to each other via a communication path.

The reception device converts an optical signal that is transmitted from a transmission device in another optical transmission apparatus and that is received by a photodetector 500 via a communication path into an analog information signal that is an electric signal, converts the converted analog information signal into a digital information signal by A/D conversion processing performed by an A/D conversion device which is the reception unit 300, outputs the digital information signal, and performs signal processing on the digital information signal output from the A/D conversion device by an information signal processing unit 400 such as a demodulation unit or a detection unit.

The reception device according to the fourth embodiment includes the photodetector 500, a test signal generator 200, a reception unit 300 including an A/D conversion device, and the information signal processing unit 400.

The photodetector 500 receives an optical signal transmitted from a transmission device in another optical transmission apparatus, and converts the received optical signal into an electric signal.

The test signal generator 200 has the same configuration as the test signal generator 200 in the reception device according to the first embodiment, and outputs a test signal including an analog signal or the like used for adjustment or the like of the reception unit 300.

The reception unit 300 has the same configuration as the reception unit 300 in the reception device according to the first embodiment, and includes the input-side selector 1, the delay adjustment unit 2, the first A/D converter 3, the amplitude amplification unit 4, the analog amplifier 5, the second A/D converter 6, the frequency characteristic correcting unit 7, the bit extension unit 8, the information signal selecting and outputting unit 9, and the gain adjustment unit 10. The reception unit performs A/D conversion processing on the analog information signal output from the photodetector 500 and outputs an information signal including a digital signal to the information signal processing unit 400.

The first A/D conversion processing system A including the delay adjustment unit 2, the first A/D converter 3, and the amplitude amplification unit 4 performs A/D conversion processing on the analog information signal output from the photodetector 500 and outputs a first digital information signal whose amplitude is controlled.

The second A/D conversion processing system B including the analog amplifier 5, the second A/D converter 6, the frequency characteristic correcting unit 7, and the bit extension unit 8 performs A/D conversion processing on the analog information signal output from the photodetector 500, and outputs a second digital information signal subjected to gain adjustment and frequency correction.

The information signal selecting and outputting unit 9 including the amplitude comparison unit 91 and the output-side selector 92 compares the amplitude of the first digital information signal output from the first A/D converter 3 with the amplitude of a second digital information correction signal output from the frequency characteristic correcting unit 7, and outputs either the first digital information signal from the first A/D conversion processing system A or the second digital information signal from the second A/D conversion processing system B as a digital information signal.

As described above, the reception unit 300 converts the analog information signal output from the photodetector 500 into the first digital information signal subjected to the A/D conversion processing by the first A/D converter 3, and converts the analog information signal amplified by the analog amplifier 5 into the second digital information signal subjected to the A/D conversion processing by the second A/D converter 6 and obtained by correcting the frequency-dependent input/output characteristics of the analog amplifier 5. When the analog information signal received by the photodetector 500 and converted into an electric signal from an optical signal has a large amplitude, the reception unit 300 selects and outputs the first digital information signal, and when the analog information signal received by the photodetector 500 and converted into an electric signal from an optical signal has a small amplitude, the reception unit 300 selects and outputs the second digital information signal.

Similar to the reception device according to the first embodiment, the reception device according to the fourth embodiment has the effects of improving bit resolution for the analog information signal output from the photodetector 500 during operation with a low-voltage power supply, being capable of maintaining the signal-to-noise ratio even when the amplitude of the received analog information signal converted into an electric signal from an optical signal is small, preventing an occurrence of waveform distortion in the second digital information signal due to the frequency-dependent input/output characteristics of the analog amplifier 5 by the frequency characteristic correcting unit 7, eliminating the need for a D/A converter having high-precise bit resolution, and eliminating the need for an analog subtraction circuit that operates for a high band signal.

It is to be noted that, two or more of the above embodiments can be freely combined, or any component in the embodiments can be modified or omitted.

### INDUSTRIAL APPLICABILITY

The reception device according to the present disclosure can be applied to a communication system that performs transmission and reception by means of wireless communication, optical fiber transmission, or the like, the communication system transmitting an information signal or a radar signal modulated on a transmission side (transmission device) and demodulating or detecting a reception signal on a reception side (reception device). The reception device is preferably applied to a reception device that receives a modulated analog information signal transmitted from the transmission device, converts the received analog information signal into a digital information signal by A/D conversion, and demodulates or detects the digital information signal, and a digital optical communication system that converts an optical signal transmitted from a transmission device in another optical transmission apparatus via a communication path into an analog information signal including an electric signal by the photodetector 500, converts the analog information signal into a digital information signal by A/D conversion, and demodulates or detects the digital information signal.

### REFERENCE SIGNS LIST

100: reception antenna, 200: test signal generator, 300: reception unit, 400: information signal processing unit, 1: input-side selector, 2, 2A: delay adjustment unit, 3: first A/D converter, 4: amplitude amplification unit, 5: analog amplifier, 6: second A/D converter, 7, 7A: frequency characteristic correcting unit, 8: bit extension unit, 9: information signal selecting and outputting unit, 91: amplitude comparison unit, 92: output-side selector, 10: gain adjustment unit, 11: temperature sensor unit, A: first A/D conversion processing system, B: second A/D conversion processing system, C: digital signal processing unit

## Claims

1. A reception device comprising:
a first A/D converter to receive an analog information signal, convert the input analog information signal into a first digital information signal by A/D conversion, and output the first digital information signal;
an analog amplifier to receive the analog information signal, amplify the input analog information signal, and output an analog information amplification signal;
a second A/D converter to convert the analog information amplification signal output from the analog amplifier into a second digital information signal by A/D conversion and output the second digital information signal;
a frequency characteristic correcting unit to output a second digital information correction signal obtained by correcting the second digital information signal output from the second A/D converter based on a frequency-dependent input/output characteristic of the analog amplifier; and
an information signal selecting and outputting unit to select and output, as a digital information signal, either the first digital information signal output from the first A/D converter or the second digital information correction signal output from the frequency characteristic correcting unit.

2. The reception device according to claim 1, wherein
the frequency characteristic correcting unit includes:
a fast Fourier transform unit to transform the second digital information signal output from the second A/D converter from a time domain signal into a frequency domain signal by Fourier transform;
a waveform correction unit to correct the second digital information signal which has been subjected to Fourier transform by the fast Fourier transform unit using the frequency-dependent input/output characteristic of the analog amplifier; and
an inverse fast Fourier transform unit to transform the second digital information signal corrected by the waveform correction unit from a frequency domain signal to a time domain signal by inverse Fourier transform and output the second digital information signal as the second digital information correction signal.

3. The reception device according to claim 2, wherein
a correction value of the frequency-dependent input/output characteristic of the analog amplifier used in the waveform correction unit is set by inputting an analog test signal to the analog amplifier and measuring an analog amplification signal output from the analog amplifier.

4. The reception device according to claim 1, wherein
the frequency characteristic correcting unit is a waveform shaping filter having a characteristic of changing a pass band by a filter coefficient, the waveform shaping filter correcting the second digital information signal output from the second A/D converter by changing the filter coefficient corresponding to the frequency-dependent input/output characteristic of the analog amplifier, and outputting the corrected second digital information signal as the second digital information correction signal.

5. The reception device according to claim 4, wherein
the filter coefficient used for the waveform shaping filter is set by inputting an analog test signal to the analog amplifier and measuring a digital test correction signal output from the waveform shaping filter.

6. The reception device according to any one of claims 1 to 5, further comprising a delay adjustment unit provided in a preceding stage of the first A/D converter, the delay adjustment unit adjusting a timing at which the analog information signal is input to the first A/D converter to a timing at which the analog information amplification signal is input to the second A/D converter.

7. The reception device according to claim 6, wherein the delay adjustment unit adjusts a delay amount by a delay amount control signal based on an ambient temperature detected by a temperature sensor unit.

8. The reception device according to claim 7, wherein the delay amount to be adjusted in the delay adjustment unit is set by inputting a delay amount setting signal to the delay adjustment unit and the analog amplifier, and measuring timings at which the delay amount setting signal is input to the first A/D converter and the second A/D converter while changing an ambient temperature.

9. An A/D conversion method comprising:
converting an analog information signal into a first digital information signal by A/D conversion and outputting the first digital information signal by a first A/D converter;
amplifying the analog information signal and outputting an analog information amplification signal by an analog amplifier;
converting the analog information amplification signal into a second digital information signal by A/D conversion and outputting the second digital information signal by a second A/D converter;
outputting, by a frequency characteristic correcting unit, a second digital information correction signal obtained by correcting the second digital information signal based on a frequency-dependent input/output characteristic of the analog amplifier; and
selecting and outputting, as a digital information signal, either the first digital information signal or the second digital information correction signal by an information signal selecting and outputting unit.

10. The A/D conversion method according to claim 9, wherein
the frequency characteristic correcting unit includes a fast Fourier transform unit, a waveform correction unit, and an inverse fast Fourier transform unit, and
the outputting the second digital information correction signal includes:
transforming, by the fast Fourier transform unit, the second digital information signal from a time waveform into a frequency spectrum by Fourier transform;
correcting, by the waveform correction unit, the second digital information signal that has been subjected to Fourier transform using the frequency-dependent input/output characteristic of the analog amplifier; and
transforming the second digital information signal which has been corrected from a frequency spectrum to a time waveform by inverse Fourier transform and outputting the second digital information signal as the second digital information correction signal by the inverse fast Fourier transform unit.

11. The A/D conversion method according to claim 9, wherein
the frequency characteristic correcting unit is a waveform shaping filter having a characteristic of changing a pass band by a filter coefficient, and
the outputting the second digital information correction signal includes
correcting the second digital information signal by changing the filter coefficient corresponding to the frequency-dependent input/output characteristic of the analog amplifier, and outputting the corrected second digital information signal as the second digital information correction signal by the waveform shaping filter.
